# FASCICULE DE BREVET EUROPEEN

(11) **EP 2 239 197 B1**
(45) Date de publication et mention de la délivrance du brevet: **11.07.2012**
(21) Numéro de dépôt: 10305346.8
(22) Date de dépôt: 02.04.2010
(51) Int. Cl.: B64D 11/06

(54) **Dispositif d'accouplement à un rail embarqué dans un véhicule**
Kupplungsvorrichtung an einer fahrzeugseitig eingebauten Schiene
Rail coupling device on board a vehicle

(30) Priorité: 06.04.2009 FR 0952246
(43) Date de publication de la demande: 13.10.2010
(73) Titulaire: Daouk, Antar, 75016 Paris (FR)
(72) Inventeur: Daouk, Antar, 75016 Paris (FR)
(74) Mandataire: Weber, Jean-François

(56) Documents cités:
- US-A- 4 185 799
- US-A- 6 149 359
- US-A1- 2004 206 880
- US-A1- 2005 072 897

## Description

La présente invention se rapporte au domaine technique général des dispositifs d'accouplement permettant d'attacher de façon amovible un équipement à un rail lui-même embarqué dans un véhicule. En particulier, la présente invention est relative au domaine de l'accouplement rapide d'équipements (tels que des sièges, des éléments de cuisine de bord, etc.) à des rails fixés dans des aéronefs tels que les hélicoptères ou les avions.

La présente invention concerne plus particulièrement un dispositif pour accoupler un équipement à un rail embarqué dans un véhicule, ledit dispositif comprenant d'une part un corps principal conçu pour être attaché au rail et d'autre part un organe de liaison attaché au corps principal et conçu pour être relié audit équipement.

Il est connu d'équiper les aéronefs de rails permettant l'attache réversible et rapide d'équipements de bord, tels que des sièges, chariots, nacelles, éléments de cuisine ou de toilette, etc. En général, les aéronefs sont équipés d'au moins deux rails parallèles de façon à pouvoir attacher un même équipement de bord simultanément à chaque rail pour obtenir une fixation parfaitement stable et rigide. En particulier, les équipements de bord lourds et massifs nécessitent d'être fixés selon un polygone de fixation, et par exemple selon un quadrilatère de fixation avec deux points de fixation situés sur un premier rail et deux autres points de fixation situés sur un deuxième rail parallèle au premier, les quatre points de fixation formant, dans le plan d'extension longitudinal desdits rails, un rectangle. Chaque point de fixation est réalisé à l'aide d'un dispositif d'accouplement rapide qui assure une interface de fixation entre l'équipement de bord à installer et le rail. Un tel dispositif d'accouplement rapide est bien connu dans le domaine, et peut se présenter par exemple sous la forme décrite dans le document FR-2 912 993. Un tel dispositif (souvent appelés *« pied de fixation* » dans le domaine) comporte ainsi d'une part une platine d'attache à l'équipement de bord, solidarisée à ce dernier par une liaison rigide, par exemple par vissage, et d'autre part un moyen d'ancrage permettant la fixation rapide et réversible du dispositif d'accouplement au rail. Un autre dispositif de l'art antérieur est décrit dans le document US 2005/0072897.

Un exemple d'installation d'un équipement de bord, en l'espèce un chariot de cuisine présentant une forme globale parallélépipédique, va être exposé succinctement dans ce qui suit.

Le chariot de cuisine en question comporte une face de fond globalement rectangulaire aux quatre coins de laquelle sont respectivement vissés quatre dispositifs d'accouplement conformes à la description qui précède. Le personnel en charge de l'installation de ce chariot de cuisine soulève le chariot et vient le positionner sur les rails, de façon que deux pieds de fixation reposent sur un premier rail tandis que les deux autres pieds reposent sur l'autre rail. Le personnel actionne ensuite le moyen d'ancrage de chaque pied, pour solidariser chacun des quatre pieds au rail correspondant et ainsi obtenir une fixation rigide et stable du chariot de cuisine sur le plancher de la cabine de l'avion. Une fois cette opération de fixation des pieds sur les rails effectuée, le chariot de cuisine se retrouve dans la plupart des cas soumis à des contraintes mécaniques intempestives du fait des efforts de fixation qui s'exercent au niveau des quatre pieds de fixation. Ces contraintes mécaniques permanentes constituent une menace pour l'intégrité du chariot de cuisine puisqu'elles peuvent conduire, éventuellement sous l'effet de phénomènes de fatigue mécanique, à une détérioration du chariot. Ces contraintes introduites par le quadrilatère de fixation peuvent également générer des déformations de la structure du chariot de cuisine, déformations qui peuvent nuire à la fonctionnalité et/ou à l'intégrité du chariot.

Les objets assignés à l'invention visent par conséquent à porter remède aux différents inconvénients de l'art antérieur mentionnés dans ce qui précède et à proposer un nouveau dispositif pour accoupler un équipement à un rail embarqué dans un véhicule, qui permet de façon particulièrement simple, rapide et fiable de réduire sensiblement le niveau de contrainte mécanique auquel est soumis l'équipement en question du fait de son accouplement au rail, tout en permettant à un utilisateur de contrôler précisément l'orientation de l'équipement relativement au rail.

Un autre objet de l'invention vise à proposer un nouveau dispositif pour accoupler un équipement à un rail embarqué dans un véhicule, de construction particulièrement compacte et bon marché.

Un autre objet de l'invention vise à proposer un nouveau dispositif pour accoupler un équipement à un rail embarqué dans un véhicule particulièrement simple à utiliser.

Un autre objet de l'invention vise à proposer un nouveau dispositif pour accoupler un équipement à un rail embarqué dans un véhicule, qui permet à un utilisateur de régler sans effort et de façon précise le positionnement de l'équipement relativement au rail.

Un autre objet de l'invention vise à proposer un nouveau dispositif pour accoupler un équipement à un rail embarqué dans un véhicule, qui met en oeuvre un minimum de pièces et dont le fonctionnement est particulièrement fiable et rapide.

Un autre objet de l'invention vise à proposer un nouveau dispositif pour accoupler un équipement à un rail embarqué dans un véhicule, de conception particulièrement simple et économique.

Un autre objet de l'invention vise à proposer un nouveau dispositif pour accoupler un équipement à un rail embarqué dans un véhicule, qui permet de libérer sensiblement complètement l'équipement des contraintes subi par ce dernier du fait de son accouplement au rail.

Un autre objet de l'invention vise à proposer un nouveau dispositif pour accoupler un équipement à un rail embarqué dans un véhicule qui permet d'absorber les éventuelles déflexions du rail lors du déplacement du véhicule.

Les objets assignés à l'invention sont atteints à l'aide d'un dispositif pour accoupler un équipement à un rail embarqué dans un véhicule, ledit dispositif comprenant d'une part un corps principal conçu pour être attaché au rail et d'autre part un organe de liaison attaché au corps principal et conçu pour être relié audit équipement, l'organe de liaison comprenant au moins une première platine montée sur le corps principal avec une possibilité de déplacement libre relativement audit corps principal, ledit dispositif comprenant en outre au moins un premier moyen de verrouillage / déverrouillage conçu pour évoluer entre d'une part une configuration de verrouillage dans laquelle il immobilise ladite première platine dans la position instantanée que cette dernière occupe au moment où le premier moyen de verrouillage / déverrouillage adopte sa configuration de verrouillage, et une configuration de déverrouillage dans laquelle il laisse la première platine libre de se déplacer relativement au corps principal, ledit dispositif étant **caractérisé en ce qu**'il comprend au moins un premier moyen de réglage conçu pour ajuster, sous l'effet d'une manipulation du premier moyen de réglage par un utilisateur, la position de la première platine relativement au corps principal alors que le premier moyen de verrouillage / déverrouillage est en configuration de verrouillage.

D'autres objets et avantages de l'invention apparaîtront plus en détails à la lecture de la description qui suit, ainsi qu'à l'aide des dessins annexés, donnés à titre purement illustratif et non limitatif, parmi lesquels :

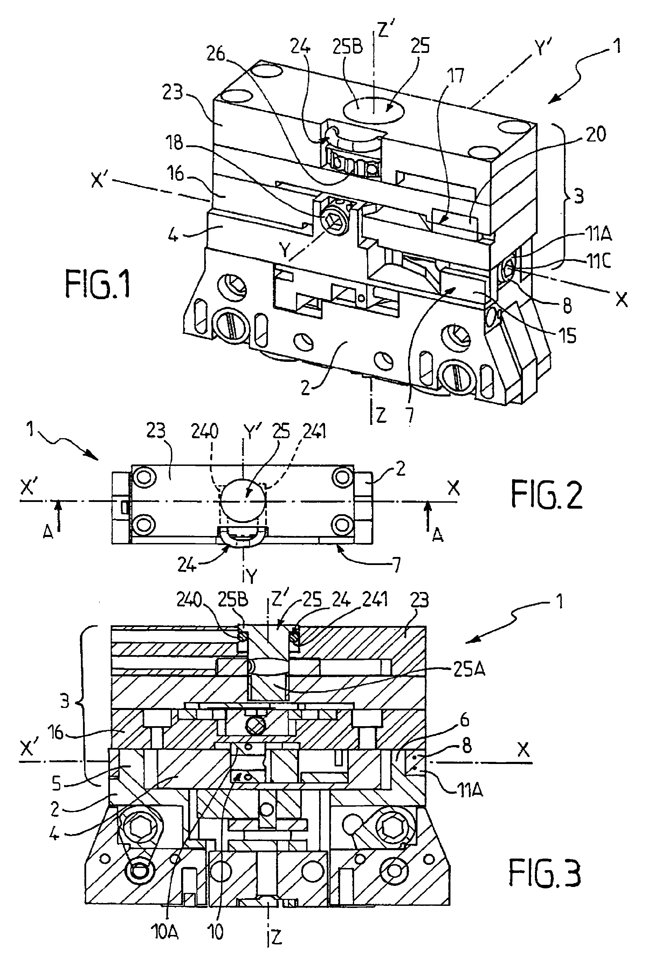

- La figure 1 illustre, selon une vue schématique en perspective, un dispositif pour accoupler un équipement à un rail embarqué dans un avion conforme à l'invention, ledit dispositif étant pourvu d'un organe de liaison comprenant trois platines montées en translation les unes par rapport aux autres, chacune selon une direction différente perpendiculaire aux deux autres directions, le dispositif comprenant en outre un troisième moyen de verrouillage / déverrouillage qui se trouve dans une configuration de verrouillage dans laquelle il immobilise la troisième platine dans une position prédéterminée.
- La figure 2 illustre, selon une vue de dessus, le dispositif de la figure 1.
- La figure 3 est une vue en coupe, selon la ligne A-A de la figure 2, du dispositif représenté aux figures 1 et 2.
- Les figures 4 à 6 correspondent respectivement aux figures 1 à 3 mais avec le troisième moyen de verrouillage / déverrouillage qui se trouve cette fois dans une configuration de déverrouillage dans laquelle il laisse la troisième platine libre de se déplacer relativement à la deuxième platine.
- La figure 7 illustre, selon une vue schématique en perspective, un détail de réalisation du dispositif des figures 1 et 4 dans lequel les deuxième et troisième platines ont été omises, pour rendre visible la structure du premier moyen de réglage et du premier moyen de verrouillage / déverrouillage, ce dernier se trouvant dans sa configuration de déverrouillage.
- La figure 8 illustre, selon une vue de dessus, le détail de réalisation de la figure 7.
- Les figures 9 et 10 correspondent respectivement aux figures 7 et 8, à la seule différence que le premier moyen de verrouillage / déverrouillage est en configuration de verrouillage.

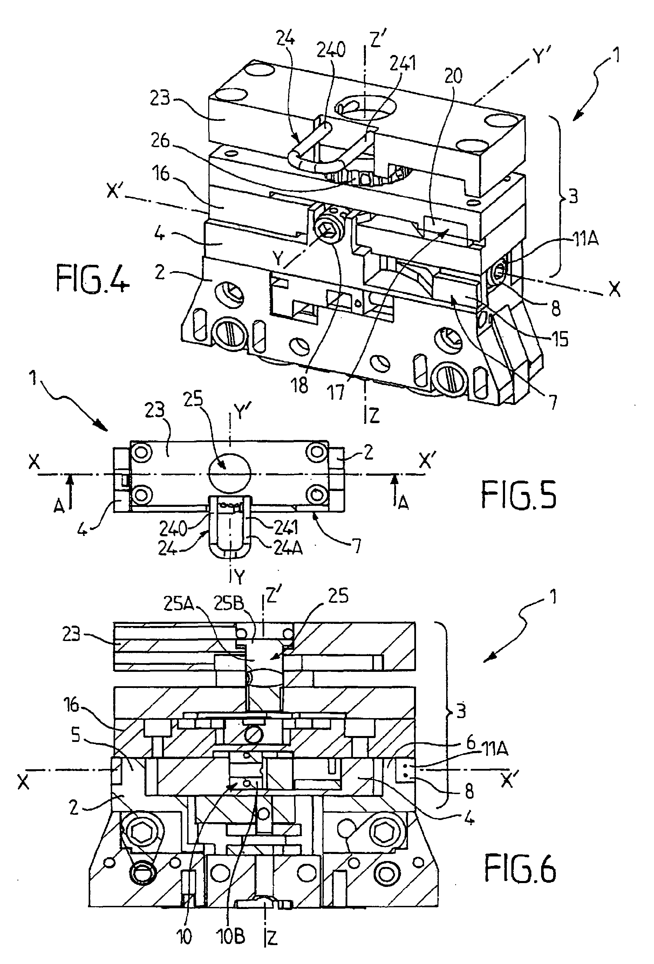

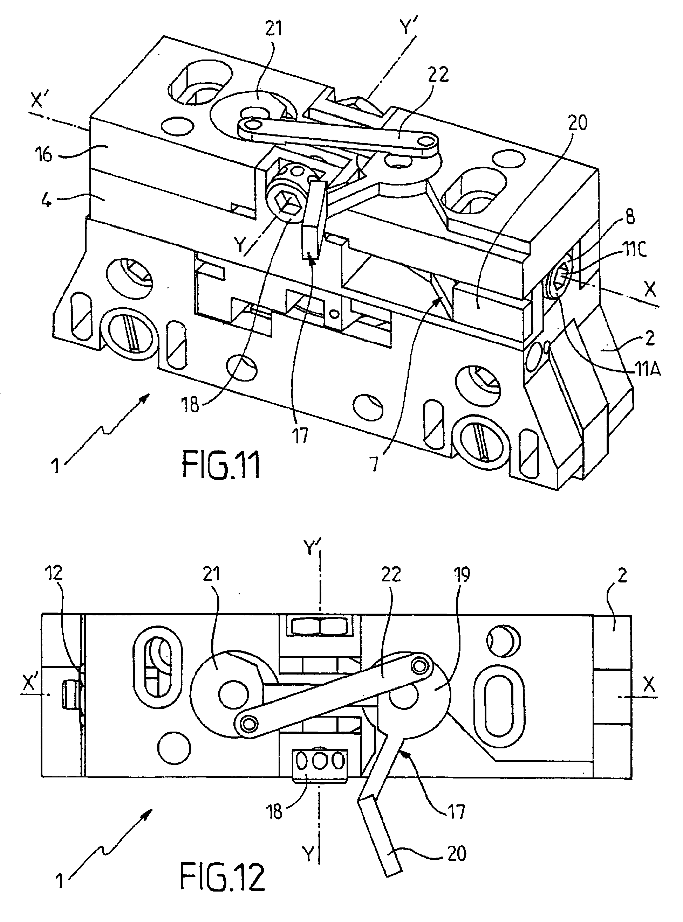

- La figure 11 illustre, selon une vue schématique en perspective, un détail de réalisation du dispositif des figures 1 et 4 dans lequel seule la troisième platine a été omise, de façon à rendre visible la structure d'un deuxième moyen de verrouillage / déverrouillage qui se trouve dans une configuration de déverrouillage dans laquelle il laisse la deuxième platine libre de se déplacer relativement à la première platine et celle d'un deuxième moyen de réglage conçu pour ajuster, sous l'effet d'une manipulation de l'utilisateur, la position de la deuxième platine relativement à la première platine lorsque le deuxième moyen de verrouillage est en configuration de verrouillage.
- La figure 12 illustre, selon une vue de dessus, le dispositif de la figure 11.
- Les figures 13 et 14 correspondent respectivement aux figures 11 et 12 à la seule différence que le deuxième moyen de verrouillage est dans une en configuration de verrouillage dans laquelle il immobilise la deuxième platine en position.

L'invention concerne un dispositif 1 pour accoupler un équipement (non illustré) à un rail (non illustré), ledit rail étant embarqué dans un véhicule (non illustré). De façon préférentielle, le dispositif 1 constitue un dispositif pour accoupler un équipement à un rail embarqué dans un aéronef, tel qu'un avion ou un hélicoptère par exemple. Dans ce qui suit, on fera référence uniquement, pour des raisons de simplicité et de concision de la description, à un dispositif 1 spécifiquement conçu pour être accouplé à un rail embarqué dans un aéronef, étant entendu que l'invention n'est pas limitée à cette application aéronautique préférentielle et peut également être employée sur un véhicule terrestre ou nautique.

De préférence, le dispositif 1 est un dispositif d'accouplement rapide, permettant à un utilisateur d'accoupler et de désaccoupler à volonté le dispositif 1 de façon manuelle, à l'aide de sa seule force physique.

De préférence, l'utilisateur peut réaliser l'accouplement et le désaccouplement sans outil, en manipulant directement des organes de commande intégrés au pied. Le dispositif 1 est ainsi dans ce cas préférentiel un dispositif à auto-accouplement.

De préférence, le rail avec lequel le dispositif 1 d'accouplement est destiné à être accouplé est un rail de type aéronautique, pourvu d'une fente centrale alvéolée comme décrit par exemple dans le document FR-2 912 993. Une telle construction de rail est bien connue en tant que telle, de sorte qu'il n'est pas nécessaire de la décrire plus avant ici.

Le dispositif 1 conforme à l'invention comprend un corps principal 2 conçu pour être attaché au rail par tout moyen d'ancrage connu, conforme par exemple à l'enseignement du document FR-2 893 996 ou FR-2 912 993. Le moyen d'ancrage permet ainsi de réaliser une liaison mécanique d'encastrement entre le corps principal 2 et le rail.

Le dispositif 1 comprend également un organe de liaison 3 attaché au corps principal 2 et conçu pour être relié à l'équipement à installer. L'organe de liaison 3 forme ainsi une interface de fixation entre l'équipement à installer (qui peut être par exemple un bloc de sièges, un chariot, un élément de cuisine de bord, etc.) dans le véhicule et le corps principal 2 qui lui-même est destiné à être assujetti au rail. Comme évoqué précédemment, l'organe de liaison 3 est monté sur le corps principal 2 et est destiné à être solidarisé, par tout moyen approprié et connu, à l'équipement que l'on souhaite attacher au rail. Par exemple, l'équipement en question peut être relié par vissage à l'organe de liaison 3. L'organe de liaison 3 comprend lui-même au moins une première platine 4 montée, de préférence directement, sur le corps principal 2 avec une possibilité de déplacement libre relativement audit corps principal 2. En d'autres termes, la première platine 4 est reliée mécaniquement au corps principal 2 de façon à être en permanence solidaire de ce dernier, tout en pouvant se déplacer librement, selon une amplitude prédéterminée, relativement au corps principal 2. La première platine 4 est ainsi avantageusement montée flottante sur le corps principal 2. Cela signifie que la liaison mécanique entre le corps principal 2 et la première platine 4 autorise au moins un degré de liberté à cette dernière.

De préférence, la première platine 4 est montée sur le corps principal 2 avec une possibilité de déplacement libre selon un degré de liberté en translation, selon une première direction X-X'. La première platine 4 est donc dans ce cas montée à coulissement libre, selon la première direction X-X', sur le corps principal 2, de sorte que la première platine 4 peut ainsi glisser sur et le long du corps principal 2, parallèlement à la première direction X-X'. De préférence, la première platine 4 peut ainsi translater librement entre deux butées gauche et droite 5, 6 solidaire du corps principal 2 et de préférence venant de matière avec ce dernier. La première platine 4 peut ainsi évoluer librement entre deux positions de butées gauche et droite, le long de la première direction X-X'. Il est cependant tout à fait envisageable que la liaison mécanique existant entre le corps principal 2 et la première platine 4 autorise plus d'un degré de liberté, sans pour autant que l'on sorte du cadre de l'invention. De préférence, la première direction X-X' est sensiblement parallèle à la direction d'extension longitudinale du rail auquel le dispositif 1 est accouplé. La première platine 4 est donc dans ce cas montée à translation longitudinale sur le corps principal 2.

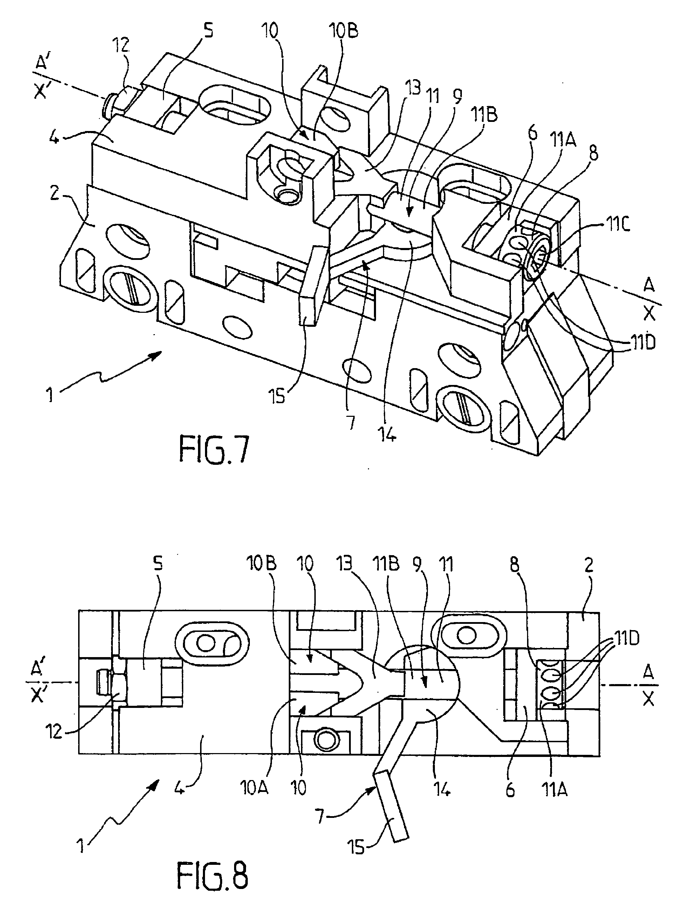

Le dispositif 1 d'accouplement comprend en outre au moins un premier moyen de verrouillage / déverrouillage 7 conçu pour évoluer entre d'une part une configuration de verrouillage (illustré aux figures 1 à 6 et 9 à 13) dans laquelle il immobilise, directement ou indirectement, la première platine 4 dans la position instantanée que cette dernière occupe au moment où le premier moyen de verrouillage 7 adopte sa configuration de verrouillage, et une configuration de déverrouillage (illustré aux figures 7 et 8) dans laquelle il laisse la première platine 4 libre de se déplacer relativement au corps principal 2. En d'autres termes, le premier moyen de verrouillage / déverrouillage 7 coopère avec la première platine 4 pour pouvoir immobiliser cette dernière relativement au corps principal 2 dans l'une quelconque des positions qu'est susceptible d'occuper la première platine 4 relativement au corps principal 2. Ainsi, l'invention permet à la première platine 4 de se placer librement, sous l'effet de la réaction mécanique exercée par l'équipement, dans une position de moindre contrainte mécanique, et de rester maintenue dans cette position par la mise en configuration de verrouillage du moyen de verrouillage / déverrouillage 7. La mise en oeuvre d'un montage flottant permet à la première platine 4 d'adopter naturellement, sous l'effet de la seule réaction mécanique exercée par l'équipement, une position optimale dans laquelle les contraintes exercées sur l'équipement sont réduites.

Une fois cette position naturellement trouvée par la platine 4, le caractère flottant du montage de cette dernière relativement au corps principal 2 est inhibé en plaçant le premier moyen de verrouillage / déverrouillage 7 dans sa configuration de verrouillage. L'invention repose donc à cet égard sur la mise en oeuvre d'une platine montée flottante sur le corps principal 2 et qui peut être verrouillée dans l'une quelconque des positions que son montage flottant lui permet d'adopter. De préférence, le moyen de verrouillage / déverrouillage 7 est conçu pour pouvoir être actionné manuellement par un utilisateur, lequel peut ainsi commander le passage du moyen de verrouillage / déverrouillage 7 de sa configuration de verrouillage à sa configuration de déverrouillage.

Le dispositif 1 conforme à l'invention comprend également au moins un premier moyen de réglage 8 conçu pour ajuster, sous l'effet d'une manipulation du premier moyen de réglage 8 par un utilisateur, la position de la première platine 4 relativement au corps principal 2 alors que le premier moyen de verrouillage 7 est en configuration de verrouillage. Le premier moyen de réglage 8 permet ainsi à un utilisateur de faire varier, de façon précise et contrôlée, la position de la première platine 4 relativement au corps principal 2 à la condition que le premier moyen de verrouillage / déverrouillage 7 soit en configuration de verrouillage.

Grâce à cette mesure technique, combinée avec les autres caractéristiques décrites dans ce qui précède, l'utilisateur est en mesure de mettre en oeuvre la séquence d'opération suivante :
- Fixation du dispositif 1 au rail, avec un équipement attaché à l'organe de liaison 3, le moyen de verrouillage / déverrouillage 7 se trouvant alors en configuration de verrouillage.
- Relaxation des contraintes mécaniques sollicitant intempestivement l'équipement, par la mise en configuration de déverrouillage du moyen de verrouillage / déverrouillage 7. Cette mise en configuration de déverrouillage permet en effet à la première platine 4 d'atteindre librement, sous l'effet de la seule réaction mécanique exercée par l'équipement, sa position naturelle de minimisation des contraintes.
- Mise en configuration de verrouillage du premier moyen de verrouillage / déverrouillage 7, pour immobiliser la première platine 4 dans cette position de minimisation des contraintes,
- Ajustement précis et contrôlé de la position de la première platine 4 relativement au corps principal 2, par manipulation du premier moyen de réglage 8.

L'invention permet ainsi, dans cette variante préférentielle de réalisation, d'opérer un réglage fin de la position de la platine 4 qui permet de parfaire le positionnement de l'équipement relativement au rail.

Avantageusement, le premier moyen de réglage 8 est conçu pour évoluer entré :
- d'une part une configuration embrayée (illustré aux figures 1 à 6 et 9 à 14) dans laquelle le premier moyen de réglage 8 est lié mécaniquement à la première platine 4 pour immobiliser cette dernière en position et permettre ledit ajustement de la position de la première platine 4,
- et d'autre part une configuration débrayée (illustré aux figures 7 et 8) dans laquelle le premier moyen de réglage 8 laisse la première platine 4 libre de se déplacer relativement au corps principal 2.

En d'autres termes, le moyen de réglage 8 assure, lorsqu'il est en configuration embrayée, une fonction de maintien en position de la première platine 4 relativement au corps principal 2 avec une possibilité de réglage de cette position, ce réglage étant de préférence commandé par l'utilisateur.

Avantageusement, lesdits premiers moyen de réglage 8 et moyen de verrouillage / déverrouillage 7 coopèrent pour que la mise en configuration de verrouillage du premier moyen de verrouillage / déverrouillage 7 entraîne la mise en configuration embrayée du premier moyen de réglage 8. Ainsi, dans ce mode de réalisation préférentiel, le passage du premier moyen de verrouillage / déverrouillage 7 de sa configuration de déverrouillage à sa configuration de verrouillage provoque, par action mécanique du premier moyen de verrouillage / déverrouillage 7 sur le moyen de réglage 8, la mise en configuration embrayée du premier moyen de réglage 8, dans laquelle le premier moyen de réglage 8 immobilise en position la première platine 4.

En d'autres termes, le premier moyen de verrouillage / déverrouillage 7 immobilise la première platine 4 par l'intermédiaire du premier moyen de réglage 8. Cette coopération spécifique entre le premier moyen de réglage 8 et le premier moyen de verrouillage / déverrouillage 7 permet d'obtenir un dispositif extrêmement compact, simple, bon marché et fiable. Réciproquement, lesdits premiers moyens de réglage 8 et moyens de verrouillage / déverrouillage 7 coopèrent avantageusement pour que la mise en configuration de déverrouillage du premier moyen de verrouillage / déverrouillage 7 entraîne la mise en configuration débrayée du premier moyen de réglage 8. En d'autres termes, le passage du premier moyen de verrouillage / déverrouillage 7 dans sa configuration de déverrouillage entraîne, par action mécanique du premier moyen de verrouillage 1 déverrouillage 7 sur le premier organe de réglage 8, le passage du premier moyen de réglage 8 en configuration débrayée, ce qui libère la première platine 4 de sa liaison mécanique avec le premier moyen de réglage 8, la première platine 4 étant ainsi libre de se déplacer relativement au corps principal 2 (configuration flottante).

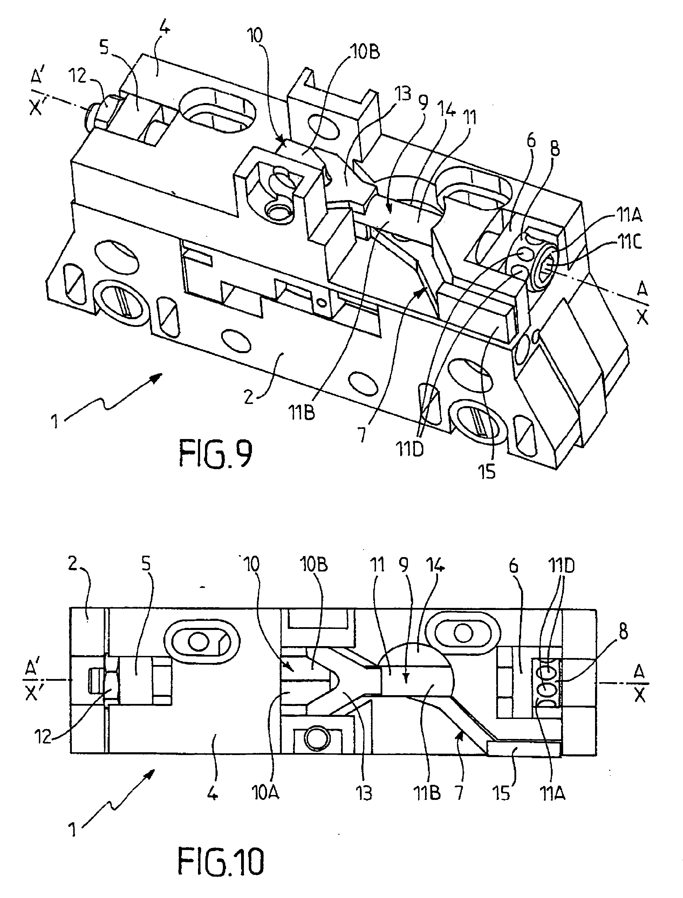

Conformément à la variante de réalisation illustrée aux figures, le premier moyen de réglage 8 comprend avantageusement :
- un premier organe fileté actif 9 monté à rotation, de préférence directement, sur le corps principal 2
- et un premier organe fileté passif 10 solidaire de la première platine 4 et conçu pour évoluer entre d'une part une configuration d'engrènement (illustré aux figures 9 et 10), dans laquelle le premier organe fileté passif 10 engrène avec le premier organe fileté actif 9 pour transformer le mouvement de ce dernier en mouvement de la première platine 4 et d'autre part une configuration de libération (illustré aux figures 7 et 8) dans laquelle le premier organe fileté passif 10 n'engrène pas avec le premier organe fileté actif 9, de sorte que le premier organe fileté actif 9 ne peut agir sur la position de la première platine 4.

Le recours à la coopération d'organes filetés pour régler la position de la première platine 4 relativement au corps principal 2 est particulièrement intéressant en ce qu'il permet un réglage extrêmement progressif et précis, tout en permettant, par l'effet de friction des filets entre eux, une immobilisation parfaite de la platine 4 lorsque le premier moyen de réglage 8 n'est pas sollicité par l'utilisateur.

De préférence, la configuration de libération du premier organe fileté passif 10 est une configuration de rappel, c'est-à-dire que le premier organe fileté passif 10, en l'absence de sollicitation positive contraire, n'engrène pas avec le premier organe fileté actif 9.

Cette caractéristique technique permet de faciliter le contrôle du passage du premier organe fileté passif 10 de sa configuration d'engrènement à sa configuration de libération et réciproquement, comme cela ressortira de la description qui suit.

Avantageusement, le premier organe fileté actif 9 comprend une première vis 11 montée, sur le corps principal 2, à rotation selon son axe longitudinal d'extension A-A' (lequel est parallèle à l'axe X-X' dans la variante illustrée aux figures). Dans le mode de réalisation illustré aux figures, la première vis 11 est montée à rotation pure sur le corps principal 2, c'est-à-dire qu'elle possède uniquement la faculté de tourner sur elle-même, selon l'axe A-A' et est bloquée en translation. A cet effet, la vis est enfilée à travers les deux butées 5, 6 qui sont disposées respectivement à chaque extrémité du corps principal 2 selon la direction longitudinale X-X', la première vis 11 pouvant librement tourner dans les butées 5, 6, selon une liaison de pivot simple (la première vis 11 n'est pas vissée dans les butées 5, 6). La première vis 11 présente une tête 11A à partir de laquelle s'étend longitudinalement, selon l'axe A-A', une tige filetée 11B. La tige filetée 11 B s'étend ainsi longitudinalement entre une première extrémité connectée à la tête 11A et une deuxième extrémité libre opposée sur laquelle est vissé un écrou 12 qui empêche, en coopération avec la tête 11A et les butées 5, 6, la première vis 11 de se déplacer en translation selon l'axe X-X'. L'écrou 12 n'est toutefois pas serré à fond, de manière à permettre la rotation de la vis 11A sur elle-même, selon l'axe A-A', comme exposé précédemment. Bien entendu, les parties de la tige 11 B qui tournent dans les butées 5, 6 sont avantageusement lisses, de manière à permettre une rotation aisée de la première vis 11. La tête 11A de la première vis 11 est avantageusement accessible à partir de l'extérieur du dispositif 1 et est préférentiellement pourvue d'une empreinte 11C polygonale destinée à coopérer avec un outil (du genre clé à six pans) pour permettre à l'utilisateur de faire tourner sur son axe A-A' la première vis 11.

Afin d'éviter que la position angulaire de la première vis 11 autour de l'axe A-A' ne soit modifiée intempestivement au fil du temps, notamment sous l'effet des vibrations produites lors du déplacement du véhicule, la tête de vis 11A est avantageusement pourvue, sur son flanc, de concavités 11 D destinées à coopérer avec un poussoir à bille (non illustré) solidaire du corps principal 2. Ce poussoir à bille permet de générer un effort de blocage qui d'une part est suffisamment important pour empêcher la vis 11 de tourner accidentellement (c'est-à-dire en dehors de toute action positive de l'utilisateur à cet effet), mais qui d'autre part est suffisamment faible pour pouvoir être aisément surmonté par un utilisateur désireux de faire tourner manuellement (à l'aide d'une clé à six pans par exemple) la vis 11.

Avantageusement, le premier organe fileté passif 10 comprend quant à lui une première pluralité de secteurs d'écrous 10A, 10B montés mobiles sur la première platine 4 entre une première position (correspondant à la configuration embrayée) illustrée aux figures 9 et 10, dans laquelle lesdits secteurs 10A, 10B forment un écrou complet vissé sur la première vis 11 et une deuxième position (correspondant à la configuration débrayée) dans laquelle lesdits secteurs 10A, 10B sont hors de contact de la première vis 11. Plus précisément, dans l'exemple illustré aux figures, le premier organe fileté passif 10 comprend deux secteurs d'écrous 10A, 10B formant chacun un demi-écrou. Ces secteurs 10A, 10B sont disposés de part et d'autre de la tige filetée 11 B et sont montés à translation selon une direction perpendiculaire à l'axe A-A' d'extension longitudinale de la première vis 11. Les secteurs 10A, 10B sont, en outre, avantageusement soumis à l'effet d'un ressort de rappel (non visible sur les figures) qui tend à maintenir en permanence les secteurs 10A, 10B mutuellement écartés, dans leur deuxième position illustrée à la figure 8. Dans cette deuxième position, chaque demi-écrou est hors de contact de la tige filetée 11A. Lorsque le premier moyen de réglage 8 passe en configuration embrayée, les deux secteurs 10A, 10B sont rapprochés mutuellement dans un sens radial centripète autour de l'axe A-A', jusqu'à venir mutuellement en butée et former ainsi un écrou complet dont les filets coopèrent avec les filets de la tige 11 B. Les deux secteurs 10A, 10B se trouvent alors dans leur deuxième position. L'écrou formé par la jonction des secteurs 10A, 10B est attaché à la première platine 4 et est monté fixe sur cette dernière, c'est-à-dire notamment qu'il est bloqué en rotation et ne peut donc pas tourner autour de l'axe A-A'.

De ce fait, une mise en rotation de la première vis 11 grâce à un outil introduit dans l'empreinte 11C permet de transformer le mouvement rotatif de la première vis 11 en mouvement de translation de l'écrou formé par les secteurs 10A, 10B réunis, et donc de la première platine 4, selon l'axe X-X' (lequel est confondu en l'espèce avec l'axe A-A').

Bien entendu, l'invention n'est absolument pas limitée à un dispositif de transformation de mouvement de type vis / écrou, même si un tel système est préféré car il permet à la fois d'assurer un blocage en position de la première platine 4 et un réglage fin de la position de cette dernière.

De préférence, le passage des secteurs d'écrous 10A, 10B de leur deuxième position (illustré à la figure 8) à leur première position (illustré à la figure 10) est opéré à l'aide d'une pièce de commande 13 bifide qui comporte une surface en V dont chaque branche est destinée à engager une surface oblique correspondante ménagée superficiellement sur chacun desdits secteurs d'écrous 10A, 10B.

La pièce de commande 13 est montée à translation selon l'axe A-A' entre une position de dégagement (illustrée à la figure 8) dans laquelle elle autorise les secteurs d'écrous 10A, 10B à revenir dans leur position d'écartement mutuel sous l'effet de l'action du ressort de rappel et une position de contrainte (illustrée à la figure 10) dans laquelle la pièce de commande 13 vient exercer, par un effet de rampe, une contrainte mécanique radiale centripète selon l'axe X-X' sur les secteurs 10A, 10B pour les forcer à venir en butée l'un contre l'autre et former un écrou complet vissé sur la première vis 11.

Le déplacement de la pièce de commande 13, qui fait partie du premier moyen de verrouillage / déverrouillage 7, est quant à lui contrôlé par une came 14 montée à rotation selon un axe sensiblement perpendiculaire à l'axe A-A', ladite came venant, lorsqu'elle est mise en rotation :
- soit pousser la pièce de commande 13, pour permettre à cette dernière de contraindre les secteurs d'écrous 10A, 10B de façon centripète,
- soit au contraire libérer la course de la pièce de commande 13, qui est alors repoussée par les secteurs 10A, 10B sous l'effet de l'action du ressort de rappel.

De préférence, l'axe de rotation de la came 14 est sensiblement perpendiculaire au plan d'extension du rail lorsque le dispositif 1 est assujetti audit rail.

La rotation de la came 14 est de préférence directement commandée par l'utilisateur, à l'aide d'un bras pourvu d'une poignée 15 destinée à être manipulée par l'utilisateur. Le bras et la poignée 15 font également partie du premier moyen de verrouillage / déverrouillage 7.

Avantageusement, l'organe de liaison 3 comprend en outre une deuxième platine 16 montée sur la première platine 4 avec une possibilité de déplacement libre selon un degré de liberté en translation, selon une deuxième direction Y-Y' perpendiculaire à ladite première direction X-X'. Avantageusement, les première et deuxième directions X-X', Y-Y' s'inscrivent dans un plan qui est sensiblement parallèle à la direction d'extension longitudinale du rail lorsque le corps principal 2 est attaché au rail. Dans ce cas de figure, les première et deuxième platines 4, 16 permettent ainsi une relaxation de contrainte dans le plan horizontal, c'est-à-dire dans les deux directions X-X', Y-Y' définissant ledit plan horizontal.

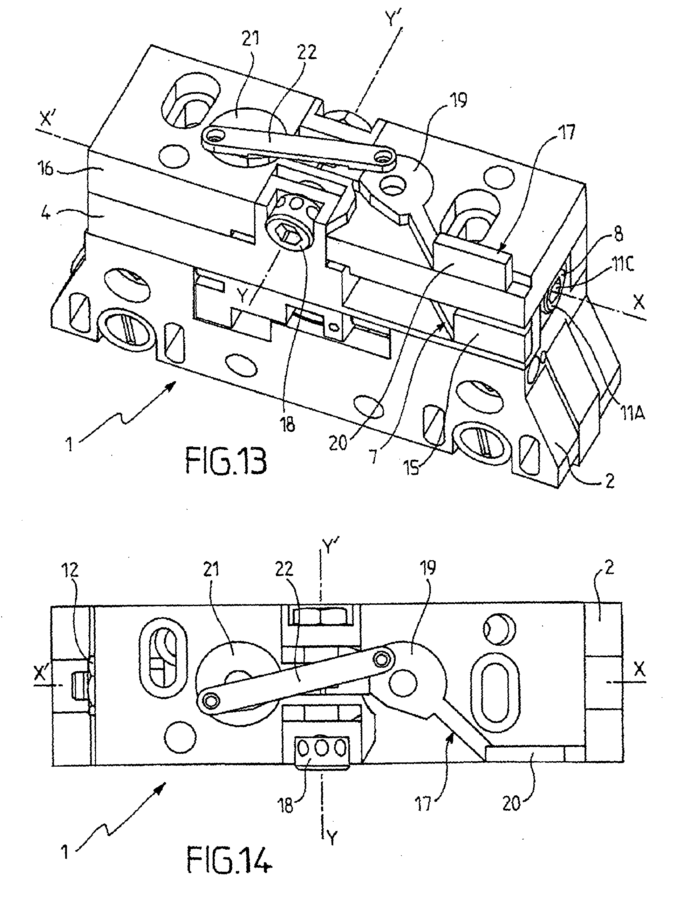

De préférence, la deuxième platine 16 est montée sur la première platine 4 de la même manière (mais décalée angulairement de 90°) que la première platine 4 est montée sur le corps principal 2. Ainsi, le dispositif 1 comprend avantageusement un deuxième moyen de verrouillage / déverrouillage 17 conçu pour évoluer entre d'une part une configuration de verrouillage (illustrée en particulier aux figures 13 et 14) dans laquelle il immobilise la deuxième platine 16 dans la position instantanée avec cette dernière occupe au moment où le deuxième moyen de verrouillage 17 adopte sa configuration de verrouillage, et d'autre part une configuration de déverrouillage (illustrée en particulier aux figures 11 et 12) dans laquelle il laisse la deuxième platine 16 libre de se déplacer relativement à la première platine 4.

Le dispositif 1 comprend également avantageusement un deuxième moyen de réglage 18 conçu pour ajuster, sous l'effet d'une manipulation du deuxième moyen de réglage 18 par l'utilisateur, la position de la deuxième platine 16 relativement à la première platine 4 alors que le deuxième moyen de verrouillage 18 est en configuration de verrouillage.

Le principe de fonctionnement des deuxièmes moyens de verrouillage 1 déverrouillage 17 et moyen de réglage 18 sont strictement conforme à ceux des premiers moyens de verrouillage / déverrouillage 7 et moyen de réglage 8, à la seule différence que pour des raisons d'encombrements il est judicieux de mettre en oeuvre, au lieu de la pièce de commande 13 bifide, un système de commande comprenant d'une part une première came 19 qui est directement mise en rotation par l'utilisateur grâce à un bras pourvu d'une poignée 20 et d'autre par une deuxième came 21 dont la rotation est commandée par une biellette 22 reliée à la première came 19, chacune desdites cames 19, 21 étant conçue pour actionner respectivement l'un des demi-écrous. Ainsi, la mise en rotation, par l'utilisateur, de la poignée 20 autour d'un axe vertical sensiblement perpendiculaire à la fois à l'axe X-X' et l'axe Y-Y' permet de mettre en rotation simultanément les première et deuxième cames 19, 21 qui viennent alors appuyer directement sur chaque demi-écrou.

Avantageusement, le dispositif 1 conforme à l'invention comprend en outre, une troisième platine 23 montée sur la deuxième platine 16 avec une possibilité de déplacement libre selon un degré de liberté en translation selon une troisième direction Z-Z' perpendiculaire à la fois à la première direction X-X' et à la deuxième direction Y-Y'. Avantageusement, la troisième platine 23 est conçue pour être fixée directement à l'équipement à installer, c'est-à-dire que la troisième platine 23 fait office d'interface de fixation entre ledit équipement et le dispositif 1 d'accouplement.

La mise en oeuvre d'un système permettant la recherche automatique d'une position de relâchement de contraintes selon l'axe vertical Z-Z' puis la fixation de la platine 23 dans cette position n'est pas véritablement nécessaire.

En effet, les problèmes de contraintes intempestives découlent essentiellement du positionnement dans le plan horizontal (parallèle au rail) des points d'attache de l'équipement au rail. En revanche, il s'avère particulièrement avantageux de prévoir, pour certains véhicules (et en particulier pour les aéronefs) une troisième platine 23 susceptible d'être montée flottante selon l'axe vertical Z-Z' sur la deuxième platine 16, afin de permettre au dispositif 1 d'accommoder en permanence les déformations en flexion subies par le rail lors du déplacement.

A cet égard, le dispositif 1 conforme à l'invention comprend avantageusement un troisième moyen de verrouillage / déverrouillage 24 conçu pour évoluer entre d'une part une configuration de verrouillage (illustrée aux figures 1 à 3) dans laquelle il immobilise la troisième platine 23 dans une position prédéterminée, et d'autre part une configuration de déverrouillage (illustrée aux figures 4 à 6) dans laquelle il laisse la troisième platine 23 libre de se déplacer relativement à la deuxième platine 16. Par exemple, la platine 23 est montée à coulissement axial selon l'axe Z-Z' sur un axe 25 parallèle à l'axe Z-Z'. Ledit axe 25 comprend lui-même une tige 25A et une tête 25B de diamètre supérieur à celui de la tige. La tête 25A est disposée dans un lamage réalisé dans la troisième platine 23. Cet assemblage confère une possibilité de débattement libre de la platine 23 le long de l'axe 25 selon une amplitude qui correspond à la profondeur du lamage en question. Cette possibilité de débattement peut avantageusement être inhibée grâce au troisième moyen de verrouillage / déverrouillage 24 qui est en l'espèce constitué par une épingle 24A en forme de U montée à coulissement sur la troisième platine 23 selon la direction transversale Y-Y' entre :
- une position verrouillée dans laquelle les branches 240, 241 du U viennent bloquer la tête 25B dans le lamage, interdisant ainsi tout débattement de la platine 23 relativement à la platine 16,
- et une position de déverrouillage dans laquelle les bras 240, 241 du U sont extirpés hors du lamage pour libérer la tête 25B et ainsi permettre un libre débattement de la troisième platine 23 selon l'axe vertical Z-Z'.

Avantageusement, la tige 25 est filetée et coopère avec un écrou 26 permettant, par un système de transformation de mouvement vis / écrou, d'ajuster finement la position de la troisième platine 23 relativement à la deuxième platine 16 lorsque le troisième moyen de verrouillage / déverrouillage 24 est en configuration de verrouillage. Ainsi, la troisième platine 23 permet les fonctionnalités suivantes :
- lorsque le troisième moyen de verrouillage / déverrouillage 24 est en configuration de déverrouillage : adaptation permanente aux éventuels effets de déflection du plancher sur lequel est monté le rail, grâce à la mise en oeuvre d'un montage flottant de la troisième platine 23 relativement à la deuxième platine 16 (illustré aux figures 4 à 6),
- lorsque le troisième moyen de verrouillage / déverrouillage 24 est en configuration de verrouillage (illustré aux figures 1 à 3): la platine 23 n'est pas montée flottante relativement à la platine 16, mais sa position est en revanche ajustable grâce à un système vis / écrou qui peut être commandé de l'extérieur par l'utilisateur, l'écrou 26 formant une molette de commande.

## Revendications

1. Dispositif (1) pour accoupler un équipement à un rail embarqué dans un véhicule, ledit dispositif (1) comprenant d'une part un corps principal (2) conçu pour être attaché au rail et d'autre part un organe de liaison (3) attaché au corps principal (2) et conçu pour être relié audit équipement, l'organe de liaison (3) comprenant au moins une première platine (4) montée sur le corps principal (2) avec une possibilité de déplacement libre relativement audit corps principal (2), ledit dispositif comprenant en outre au moins un premier moyen de verrouillage / déverrouillage (7) conçu pour évoluer entre d'une part une configuration de verrouillage dans laquelle il immobilise ladite première platine (4) dans la position instantanée que cette dernière occupe au moment où le premier moyen de verrouillage / déverrouillage (7) adopte sa configuration de verrouillage, et une configuration de déverrouillage dans laquelle il laisse la première platine (4) libre de se déplacer relativement au corps principal (2), ledit dispositif (1) étant **caractérisé en ce qu'**il comprend au moins un premier moyen de réglage (8) conçu pour ajuster, sous l'effet d'une manipulation du premier moyen de réglage (8) par un utilisateur, la position de la première platine (4) relativement au corps principal (2) alors que le premier moyen de verrouillage / déverrouillage (7) est en configuration de verrouillage.

2. Dispositif (1) selon la revendication 1 **caractérisé en ce que** le premier moyen de réglage (8) est conçu pour évoluer entre d'une part une configuration embrayée dans laquelle il est lié mécaniquement à la première platine (4) pour immobiliser cette dernière en position et permettre ledit ajustement de la position de la première platine (4) et d'autre part une configuration débrayée dans laquelle il laisse la première platine (4) libre de se déplacer relativement au corps principal (2).

3. Dispositif (1) selon la revendication 2 **caractérisé en ce que** lesdits premier moyen de réglage (8) et moyen de verrouillage / déverrouillage (7) coopèrent pour que la mise en configuration de verrouillage du premier moyen de verrouillage/ déverrouillage (7) entraîne la mise en configuration embrayée du premier moyen de réglage (8).

4. Dispositif (1) selon l'une des revendications 2 à 3 **caractérisé en ce que** lesdits premier moyen de réglage (8) et moyen de verrouillage / déverrouillage (7) coopèrent pour que la mise en configuration de déverrouillage du premier moyen de verrouillage/ déverrouillage (7) entraîne la mise en configuration débrayée du premier moyen de réglage (8).

5. Dispositif (1) selon l'une des revendications 1 à 4 **caractérisé en ce que** le premier moyen de réglage (8) comprend :
- un premier organe fileté actif (9) monté à rotation sur le corps principal (2),
- et un premier organe fileté passif (10) solidaire de la première platine (4) et conçu pour évoluer entre d'une part une configuration d'engrènement, dans laquelle il engrène avec le premier organe fileté actif (9) pour transformer le mouvement de ce dernier en mouvement de la première platine (4) et d'autre part une configuration de libération dans laquelle il n'engrène pas avec le premier organe fileté actif (9).

6. Dispositif selon la revendication 5 **caractérisé en ce que** la configuration de libération est une configuration de rappel.

7. Dispositif (1 ) selon la revendication 5 ou 6 **caractérisé en ce que** le premier organe fileté (9) actif comprend une première vis (11) montée, sur le corps principal (2), à rotation selon son axe longitudinal d'extension (A-A') tandis que le premier organe fileté passif (10) comprend une première pluralité de secteurs d'écrou (10A, 10B) montés mobiles sur la première platine (4) entre une première position dans laquelle lesdits secteurs (10A, 10B) forment un écrou complet vissé sur la première vis (11) et une deuxième position dans laquelle lesdits secteurs (10A, 10B) sont hors de contact de la première vis (11).

8. Dispositif (1) selon l'une des revendications 1 à 7 **caractérisé en ce que** ladite première platine (4) est montée sur le corps principal (2) avec une possibilité de déplacement libre selon un degré de liberté en translation selon une première direction (X-X').

9. Dispositif (1 ) selon la revendication 8 **caractérisé en ce que** l'organe de liaison (3) comprend une deuxième platine (16) montée sur la première platine (4) avec une possibilité de déplacement libre selon un degré de liberté en translation selon une deuxième direction (Y-Y') perpendiculaire à ladite première direction (X-X').

10. Dispositif (1) selon les revendications 8 et 9 **caractérisé en ce que** les première et deuxième directions s'inscrivent dans un plan qui est sensiblement parallèle à la direction d'extension longitudinale du rail lorsque le corps principal (2) est attaché au rail.

11. Dispositif (1) selon la revendication 9 ou 10 **caractérisé en ce qu'**il comprend un deuxième moyen de verrouillage / déverrouillage (17) conçu pour évoluer entre d'une part une configuration de verrouillage dans laquelle il immobilise ladite deuxième platine (16) dans la position instantanée que cette dernière occupe au moment où le deuxième moyen de verrouillage (17) adopte sa configuration de verrouillage, et d'autre part une configuration de déverrouillage dans laquelle il laisse la deuxième platine (16) libre de se déplacer relativement à la première platine (4).

12. Dispositif (1) selon l'une des revendications 8 à 11 **caractérisé en ce qu'**il comprend une troisième platine (23) montée sur la deuxième platine (16) avec une possibilité de déplacement libre selon un degré de liberté en translation selon une troisième direction (Z-Z') perpendiculaire à la fois à la première direction (X-X') et à la deuxième direction (Y-Y').

13. Dispositif (1) selon la revendication 12 **caractérisé en ce qu'**il comprend un troisième moyen de verrouillage / déverrouillage (24) conçu pour évoluer entre d'une part une configuration de verrouillage dans laquelle il immobilise ladite troisième platine (23) dans une position prédéterminée, et d'autre part une configuration de déverrouillage dans laquelle il laisse la troisième platine (23) libre de se déplacer relativement à la deuxième platine (16).

14. Dispositif (1) selon l'une des revendications 1 à 13 **caractérisé en ce qu'**il constitue un dispositif (1) pour accoupler un équipement à un rail embarqué dans un aéronef.

## Claims

1. Device (1) for coupling an item of equipment to a rail installed in a vehicle, said device (1) comprising firstly a main body (2) designed to be attached to the rail and secondly a connecting member (3) attached to the main body (2) and designed to be connected to said item of equipment, the connecting member (3) comprising at least one first plate (4) mounted on the main body (2) with a possibility of free movement relative to said main body (2), said device also comprising at least one first locking/unlocking means (7) designed to move between firstly a locking configuration in which it immobilises said first plate (4) in the instantaneous position that the latter is occupying at the moment when the first locking/unlocking means (7) adopts its locking configuration, and an unlocking configuration in which it leaves the first plate (4) free to move relative to the main body (2), said device (1) being **characterised in that** it comprises at least one first adjustment means (8) designed to adjust, under the effect of a manipulation of the first adjustment means (8) by a user, the position of the first plate (4) relative to the main body (2) while the first locking/unlocking means (7) is in the locking configuration.

2. Device (1) according to claim 1, **characterised in that** the first adjustment means (8) is designed to move between firstly an engaged configuration in which it is mechanically connected to the first plate (4) in order to immobilise the latter in position and to allow said adjustment of the position of the first plate (4), and secondly a disengaged position in which it leaves the first plate (4) free to move relative to the main body (2).

3. Device (1) according to claim 2, **characterised in that** said first adjustment means (8) and locking/unlocking means (7) cooperate so that the putting of the first locking/unlocking means (7) in the locking configuration causes the first adjustment means (8) to be put in the engaged configuration.

4. Device (1) according to one of claims 2 to 3, **characterised in that** said first adjustment means (8) and locking/unlocking means (7) cooperate so that the putting of the first locking/unlocking means (7) in the unlocking configuration causes the first adjustment means (8) to be put in the disengaged configuration.

5. Device (1) according to one of claims 1 to 4, **characterised in that** the first adjustment means (8) comprises:
- a first active threaded member (9) mounted for rotation on the main body (2),
- and a first passive threaded member (10) secured to the first plate (4) and designed to move between firstly a meshing configuration, in which it meshes with the first active threaded member (9) in order to transform the movement of the latter into a movement of the first plate (4), and secondly a release configuration in which it does not mesh with the first active threaded member (9).

6. Device according to claim 5, **characterised in that** the release configuration is a return configuration.

7. Device (1) according to claim 5 or 6, **characterised in that** the first active threaded member (9) comprises a first screw (11) mounted, on the main body (2), for rotation on its longitudinal extension axis (A-A') while the first passive threaded member (10) comprises a first plurality of nut sectors (10A, 10B) mounted so as to be able to move on the first plate (4) between a first position in which said sectors (10A, 10B) form a complete nut screwed on the first screw (11) and a second position in which said sectors (10A, 10B) are out of contact with the first screw (11).

8. Device (1) according to one of claims 1 to 7, **characterised in that** said first plate (4) is mounted on the main body (2) with a possibility of free movement according to a degree of freedom in translation in a first direction (X-X').

9. Device (1) according to claim 8, **characterised in that** the connecting member (3) comprises a second plate (16) mounted on the first plate (4) with a possibility of free movement according to a degree of freedom in translation in a second direction (Y-Y') perpendicular to said first direction (X-X').

10. Device (1) according to claims 8 and 9, **characterised in that** the first and second directions lie in a plane that is substantially parallel to the longitudinal extension direction of the rail when the main body (2) is attached to the rail.

11. Device (1) according to claim 9 or 10, **characterised in that** it comprises a second locking/unlocking means (17) designed to move between firstly a locking configuration in which it immobilises said second plate (16) in an instantaneous position that the latter occupies at the moment when the second locking means (17) adopts its locking configuration, and secondly an unlocking configuration in which it leaves the secondly plate (16) free to move relative to the first plate (4).

12. Device (1) according to one of claims 8 to 11, **characterised in that** it comprises a third plate (23) mounted on the second plate (16) with a possibility of free movement according to a degree of freedom in translation in a second direction (Z-Z') perpendicular both to the first direction (X-X') and to the second direction (Y-Y').

13. Device (1) according to claim 12, **characterised in that** it comprises a third locking/unlocking means (24) designed to move between firstly a locking configuration in which it immobilises said third plate (23) in a predetermined position, and secondly an unlocking configuration in which it leaves the third plate (23) free to move relative to the second plate (16).

14. Device (1) according to one of claims 1 to 13, **characterised in that** it constitutes a device (1) for coupling an item of equipment to a rail installed in an aircraft.

## Patentansprüche

1. Vorrichtung (1) zum Kuppeln einer Ausstattung an eine in einem Fahrzeug mitgeführte Schiene, wobei die Vorrichtung (1) einerseits einen Hauptkörper (2) aufweist, der konzipiert ist, um an der Schiene befestigt zu werden, und andererseits ein Verbindungselement (3), das an dem Hauptkörper (2) befestigt und konzipiert ist, um mit der Ausstattung verbunden zu werden, wobei das Verbindungselement (3) mindestens eine erste Platte (4) aufweist, die auf den Hauptkörper (2) mit einer Möglichkeit der freien Verlagerung in Bezug zu dem Hauptkörper (2) montiert ist, wobei die Vorrichtung ferner mindestens ein erstes Verriegelungs-/Entriegelungsmittel (7) aufweist, das konzipiert ist, um sich zwischen einerseits einer Verriegelungskonfiguration, in der es die erste Platte (4) in der Momentanposition, die diese Letztere in dem Augenblick belegt, in dem das erste Verriegelungs-/Entriegelungsmittel (7) seine Verriegelungskonfiguration einnimmt, stillstellt, und einer Entriegelungskonfiguration, in der es die erste Platte (4) sich frei in Bezug zu dem Hauptkörper(2) bewegen lässt, bewegen kann, Vorrichtung (1) **dadurch gekennzeichnet, dass** sie mindestens ein erstes Einstellmittel (8) aufweist, das konzipiert ist, um unter der Einwirkung einer Handhabung des ersten Einstellmittels (8) durch einen Benutzer die Position der ersten Platte (4) in Bezug zu dem Hauptkörper (2) einzustellen, während sich das erste Verriegelungs-/Entriegelungsmittel (7) in Verriegelungskonfiguration befindet.

2. Vorrichtung (1) nach Anspruch 1, **dadurch gekennzeichnet, dass** das erste Einstellmittel (8) konzipiert ist, um sich einerseits zwischen einer gekuppelten Konfiguration, in der es mechanisch mit der ersten Platte (4) verbunden ist, um diese Letztere in Position stillzustellen und das Einstellen der Position der ersten Platte (4) zu gestatten, und andererseits einer ausgekuppelten Konfiguration zu bewegen, in der es die erste Platte (4) frei lässt, um sich in Bezug zu dem Hauptkörper (2) zu bewegen.

3. Vorrichtung (1) nach Anspruch 2, **dadurch gekennzeichnet, dass** die ersten Einstellmittel (8) und Verriegelungs-/Entriegelungsmittel (7) zusammenwirken, damit die Herstellung der Verriegelungskonfiguration des ersten Verriegelungs-/Entriegelungsmittels (7) das Herstellen der gekuppelten Konfiguration des ersten Einstellmittels (8) nach sich zieht.

4. Vorrichtung (1) nach einem der Ansprüche 2 bis 3, **dadurch gekennzeichnet, dass** die ersten Einstellmittel (8) und Verriegelungs-/Entriegelungsmittel (7) zusammenwirken, damit das Herstellen der Entriegelungskonfiguration des ersten Verriegelungs-/Entriegelungsmittels (7) das Herstellen der aus gekuppelten Konfiguration des ersten Einstellmittels (8) nach sich zieht.

5. Vorrichtung (1) nach einem der Ansprüche 1 bis 4, **dadurch gekennzeichnet, dass** das erste Einstellmittel (8) Folgendes aufweist:
- ein erstes aktives Gewindeelement (9), das drehend auf den Hauptkörper (2) montiert ist,
- und ein erstes passives Gewindeelement (10), das fest mit der ersten Platte (4) verbunden, und konzipiert ist, um sich einerseits zwischen einer Eingriffskonfiguration, in der es in das erste aktive Gewindeelement (9) eingreift, um die Bewegung dieses Letzteren in eine Bewegung der ersten Platte (4) umzuformen, und andererseits einer Freigabekonfigurationen, in der es nicht in das erste aktive Gewinndeelement (9) eingreift, zu bewegen.

6. Vorrichtung nach Anspruch 5, **dadurch gekennzeichnet, dass** die Freigabekonfiguration eine Rückholkonfiguration ist.

7. Vorrichtung (1) nach Anspruch 5 oder 6, **dadurch gekennzeichnet, dass** das erste aktive Gewindeelement (9) eine erste Schraube (11) aufweist, die auf den Hauptkörper (2) in Drehung entlang ihrer Längsausdehnungsachse (A-A') montiert ist, während das erste passive Gewindeelement (10) eine erste Vielzahl von Muttersektoren (10A, 10B) aufweist, die auf der ersten Platte (4) zwischen einer ersten Position, in der die Sektoren (10A, 10B) eine komplette Mutter bilden, die auf die erste Schraube (11) geschraubt ist, und einer zweiten Position, in der die Sektoren (10A, 10B) nicht mit der ersten Schraube (11) in Berührung sind, beweglich montiert sind.

8. Vorrichtung (1) nach einem der Ansprüche 1 bis 7, **dadurch gekennzeichnet, dass** die erste Platte (4) auf den Hauptkörper (2) mit einer Möglichkeit einer freien Verlagerung gemäß einem Freiheitsgrad in Verschiebung gemäß einer ersten Richtung (X-X') montiert ist.

9. Vorrichtung (1) nach Anspruch 8, **dadurch gekennzeichnet, dass** das Verbindungselement (3) eine zweite Platte (16) aufweist, die auf die erste Platte (4) mit einer Möglichkeit einer freien Verlagerung gemäß einem Freiheitsgrad in Verschiebung entlang einer zweiten Richtung (Y-Y') senkrecht zu der ersten Richtung (X-X') montiert ist.

10. Vorrichtung (1) nach den Ansprüchen 8 und 9, **dadurch gekennzeichnet, dass** die erste und die zweite Richtung in eine Ebene fallen, die im Wesentlichen zu der Längsausdehnungsrichtung der Schiene parallel ist, wenn der Hauptkörper (2) an der Schiene befestigt ist.

11. Vorrichtung (1) nach dem Anspruch 9 oder 10, **dadurch gekennzeichnet, dass** sie ein zweites Verriegelungs-/Entriegelungsmittel (17) aufweist, das konzipiert ist, um sich zwischen einerseits einer Verriegelungskonfiguration, in der es die zweite Platte (16) in ihrer Momentanposition, die diese Letztere in dem Augenblick belegt, in dem das zweite Verriegelungsmittel (17) seine Verriegelungskonfiguration, einnimmt, und andererseits einer Entriegelungskonfiguration zu bewegen, in der es die zweite Platte (16) frei lässt, sich in Bezug zu der ersten Platte (4) zu bewegen.

12. Vorrichtung (1) nach einem der Ansprüche 8 bis 11, **dadurch gekennzeichnet, dass** sie eine dritte Platte (23) aufweist, die auf die zweite Platte (16) mit einer Möglichkeit einer freien Verlagerung gemäß einem Freiheitsgrad in Verschiebung gemäß einer dritten Richtung (Z-Z') senkrecht sowohl zu der ersten Richtung (X-X') als auch zu der zweiten Richtung (Y-Y') montiert ist.

13. Vorrichtung (1) nach Anspruch 12, **dadurch gekennzeichnet, dass** sie ein drittes Verriegelungs-/Entriegelungsmittel (24) aufweist, das konzipiert ist, um sich einerseits zwischen einerseits einer Verriegelungskonfiguration, in der es die dritte Platte (23) in einer vorbestimmten Position stillstellt, und andererseits einer Entriegelungskonfiguration zu bewegen, in der es die dritte Platte (23) frei lässt, um sich in Bezug zu der zweiten Platte (16) zu bewegen.

14. Vorrichtung (1) nach einem der Ansprüche 1 bis 13, **dadurch gekennzeichnet, dass** sie eine Vorrichtung (1) zum Kuppeln einer Ausstattung mit einer Schiene, die in einem Luftfahrzeug mitgeführt wird, bildet.
